# EUROPEAN PATENT SPECIFICATION

(11) **EP 1 234 839 B1**
(45) Date of publication and mention of the grant of the patent: **17.12.2008**
(21) Application number: 02251101.8
(22) Date of filing: 19.02.2002
(51) Int. Cl.: C08F 20/12, C08F 4/34, C09D 133/06, C09J 133/06

(54) **Improved polymeric composition**
Verbesserte Polymerzusammensetzung
Composition polymère améliorée

(30) Priority: 23.02.2001 US 270976 P; 17.10.2001 US 981350
(43) Date of publication of application: 28.08.2002
(73) Proprietor: ROHM AND HAAS COMPANY, Philadelphia, Pennsylvania 19106-2399 (US)
(72) Inventor: Lorah, Dennis Paul, Lansdale, Pennsylvania 19446 (US); Slone, Robert Victor, Quaker, Pennsylvnia 18951 (US)
(74) Representative: Kent, Venetia Katherine

(56) References cited:
- EP-A- 1 078 938
- WO-A-95/09876
- US-A- 4 063 013

## Description

This invention relates to an aqueous composition suitable for use when dry as an improved elastomeric coating, caulk, sealant, fabric treatment, or pressure sensitive adhesive, a method for preparing an aqueous emulsion polymer suitable for use as an improved elastomeric coating, caulk, sealant, fabric treatment, or pressure sensitive adhesive, and methods for providing an improved elastomeric coating, caulk or sealant, fabric treatment, or pressure sensitive adhesive. More particularly this invention relates to an aqueous composition including a predominantly acrylic aqueous emulsion polymer, the polymer having a glass transition temperature (Tg) from -90 °C to 20 °C, the polymer formed by the free radical polymerization of at least one ethylenically unsaturated nonionic acrylic monomer and 0-7.5%, by weight based on the total weight of the polymer, ethylenically unsaturated acid monomer, until 90-99.7 % of the monomers by weight, based on the total weight of the polymer, has been converted to polymer; and the subsequent polymerization of at least half, by weight, of the remaining monomer to polymer in the presence of 0.01-0.099 %, by weight based on the total weight of the polymer, t-alkyl hydroperoxide, t-alkyl peroxide, or t-alkyl perester wherein the t-alkyl group includes at least 5 Carbon atoms.

The present invention serves to provide an aqueous composition suitable for use when dry as an improved elastomeric coating, caulk, or sealant so as to retain its integrity without cracking under stress even at temperatures below
0 °C. Elastomeric coatings, caulks, and sealants are frequently applied to buildings and other constructions subjected to outdoor temperature extremes and desirably retain their integrity under such conditions. Also, the present invention serves to provide an aqueous composition suitable for use when dry as an improved pressure sensitive adhesive having improved tack which may be desirable in itself or, alternatively, provide the basis for enhancement of other adhesive properties such as peel or shear strength with retention of useful levels of tack. And, the present invention serves to provide an improved fabric treatment. By "fabric treatment" herein is meant, for example, a woven or nonwoven fabric coating, binder (as saturation binder), or adhesive coating (as flocking adhesive).

U.S. Patent No. 5,540,987 discloses emulsion polymers including at least 50% vinyl acetate having low residual formaldehyde and providing saturated cellulosic webs having improved tensile strength. The polymers are formed by the use of an hydrophobic hydroperoxide and ascorbic acid initiator throughout the course of the reaction.

The problem faced by the inventors is the provision of an aqueous predominantly acrylic composition suitable for use when dry as an improved elastomeric coating, caulk, sealant, fabric treatment or pressure sensitive adhesive. Unexpectedly, the inventors found that the use of certain levels of
t-alkyl hydroperoxide, t-alkyl peroxide, or t-alkyl perester wherein the t-alkyl group includes at least 5 Carbon atoms in the polymerization or even only in the last stages of the polymerization was sufficient to provide predominantly acrylic polymers which led to improved elastomeric coating, caulk, sealant, fabric treatment, or pressure sensitive adhesives.

In a first aspect of the present invention there is provided an aqueous composition suitable for use when dry as an improved elastomeric coating, caulk, sealant, fabric treatment, or pressure sensitive adhesive comprising a predominantly acrylic aqueous emulsion polymer, the polymer having a glass transition temperature (Tg) from -90 °C to 20 °C, formed by the free radical polymerization of at least one ethylenically unsaturated nonionic acrylic monomer and 0-7.5%, by weight based on the total weight of the polymer, ethylenically unsaturated acid monomer until 90-99.7 % of the monomers by weight, based on the total weight of the polymer, has been converted to polymer and subsequently at least half of the remaining monomer is converted to polymer in the presence of 0.01-0.099 %, by weight based on the total weight of the polymer, t-alkyl hydroperoxide, t-alkyl peroxide, or t-alkyl perester wherein the t-alkyl group includes at least 5 Carbon atoms.
In a second aspect of the present invention there is provided a method for preparing an aqueous emulsion polymer suitable for use in an improved elastomeric coating, caulk, sealant, fabric treatment, or pressure sensitive adhesive comprising forming a predominantly acrylic aqueous emulsion polymer, the polymer having a glass transition temperature (Tg) from -90 °C to 20 °C, by the free radical polymerization of at least one ethylenically unsaturated nonionic acrylic monomer and 0-7.5%, by weight based on the total weight of the polymer, ethylenically unsaturated acid monomer until 90-99.7 % of the monomers by weight, based on the total weight of the polymer, has been converted to polymer; and subsequently polymerizing at least half of the remaining monomer to polymer in the presence of 0.01-0.099 %, by weight based on the total weight of the polymer, t-alkyl hydroperoxide, t-alkyl peroxide, or t-alkyl perester wherein the t-alkyl group includes at least 5 Carbon atoms. In other aspects of the present invention there are provided a method for coating a substrate with an aqueous composition to provide an elastomeric coating on a substrate, a method for applying an aqueous caulk or sealant composition to a substrate, a method for providing a pressure sensitive adhesive on a substrate, and a method for providing a fabric treatment.

This invention relates to an aqueous composition suitable for use when dry as an elastomeric coating, caulk, sealant, fabric treatment, or pressure sensitive adhesive including a predominantly acrylic aqueous emulsion polymer, the polymer having a glass transition temperature (Tg) from -90 °C to 20 °C, formed by the free radical polymerization of at least one ethylenically unsaturated nonionic acrylic monomer and 0-7.5%, by weight based on the total weight of the polymer, ethylenically unsaturated acid monomer until 90-99.7 % of the monomers by weight, based on the total weight of the polymer, has been converted to polymer and subsequently at least half of the remaining monomer is converted to polymer in the presence of 0.01-0.099 %, by weight based on the total weight of the polymer, t-alkyl hydroperoxide, t-alkyl peroxide, or t-alkyl perester wherein the t-alkyl group includes at least 5 Carbon atoms.

The predominantly acrylic aqueous emulsion polymer contains at least one copolymerized ethylenically unsaturated nonionic acrylic monomer. By "predominantly acrylic" herein is meant that the polymer contains greater than 50%, preferably greater than 60%, by weight, copolymerized units deriving from (meth)acrylic monomers such as, for example, (meth)acrylate esters, (meth)acrylamides, (meth)acrylonitrile, and (meth)acrylic acid. The use of the term "(meth)" followed by another term such as acrylate or acrylamide, as used throughout the disclosure, refers to both acrylates or acrylamides and methacrylates and methacrylamides, respectively. By "nonionic monomer" herein is meant that the copolymerized monomer residue does not bear an ionic charge between pH=1-14.

The ethylenically unsaturated nonionic acrylic monomers include, for example, (meth)acrylic ester monomers including methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate, hydroxyethyl methacrylate, hydroxypropyl methacrylate. Other ethylenically unsaturated nonionic monomers which may be incorporated into the polymer with the proviso that the polymer must be predominantly acrylic in composition include, for example, styrene and substituted styrenes; butadiene; vinyl acetate, vinyl butyrate and other vinyl esters; vinyl monomers such as vinyl chloride, vinyl toluene, and vinyl benzophenone; and vinylidene chloride. Preferred are all-acrylic, styrene/acrylic, and vinyl acetate/acrylic polymers.

The emulsion polymer contains from 0% to 7.5%, preferably 0.5% to 5%, by weight based on total monomer weight, of a copolymerized monoethylenically-unsaturated acid monomer, based on the weight of the polymer, such as, for example, acrylic acid, methacrylic acid, crotonic acid, itaconic acid, fumaric acid, maleic acid, monomethyl itaconate, monomethyl fumarate, monobutyl fumarate, maleic anhydride, 2-acrylamido-2-methylpropane sulfonic acid, vinyl sulfonic acid, styrene sulfonic acid, 1-allyloxy-2-hydroxypropane sulfonic acid, alkyl allyl sulfosuccinic acid, sulfoethyl (meth)acrylate, phosphoalkyl (meth)acrylates such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate.

The emulsion polymer used in this invention may contain from 0% to 1%, by weight based on monomer weight, copolymerized multi-ethylenically unsaturated monomers such as, for example, allyl methacrylate, diallyl phthalate, 1,4-butylene glycol dimethacrylate, 1,2-ethylene glycol dimethacrylate, 1,6-hexanediol diacrylate, and divinyl benzene.

The glass transition temperature ("Tg") of the emulsion polymer is from -90 °C to 20 °C, as measured by differential scanning calorimetry (DSC) taking the midpoint in the heat flow versus temperature transition as the Tg value, the monomers and amounts of the monomers being selected to achieve the desired polymer Tg range as is well known in the art. The preferred Tg of the emulsion polymer for use in elastomeric wall coatings is from -40 °C to 20 °C, more preferably from -40 °C to 0 °C; the preferred Tg of the emulsion polymer for use in caulks and sealants is -60 °C to 20 °C; the preferred Tg of the emulsion polymer for use in pressure sensitive adhesives is -90 °C to 0 °C; the preferred Tg of the emulsion polymer for use in fabric treatment is from -60 °C to 0 °C.

The polymerization techniques used to prepare aqueous emulsion polymers are well known in the art. In the emulsion polymerization process conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the weight of monomer. Either thermal or redox initiation processes may be used. The reaction temperature is maintained at a temperature lower than 100 °C throughout the course of the reaction. Preferred is a reaction temperature between 30 °C and 95 °C, more preferably between
50 °C and 90 °C. The monomer mixture may be added neat or as an emulsion in water. The monomer mixture may be added in one or more additions or continuously, linearly or not, over the reaction period , or combinations thereof.

Conventional free radical initiators may be used such as, for example, hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, and ammonium or alkali metal salts of peroxydisulfuric acid, typically at a level of 0.01% to 3.0% by weight, based on the weight of total monomer. Redox systems using the same initiators (alternatively referred to as "oxidants" herein) coupled with a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, sodium 2-hydroxy-2-sulfinatoacetic acid, acetone bisulfite, amines such as ethanolamine, glycolic acid, glyoxylic acid hydrate, lactic acid, glyceric acid, malic acid, tartaric acid and salts of the preceding acids may be used. Redox reaction catalyzing metal salts of iron, copper, manganese, silver, platinum, vanadium, nickel, chromium, palladium, or cobalt may be used. However, after 90-99.7 %, preferably 95-99.7%, of the monomers by weight, based on the total weight of the polymer, have been converted to polymer, at least half of the remaining monomer is converted to polymer in the presence of 0.01-0.099 %, by weight based on the total weight of the polymer, of t-alkyl hydroperoxide, t-alkyl peroxide, or t-alkyl perester wherein the t-alkyl group includes at least 5 Carbon atoms; and preferably in the presence of 0.01-0.099 %, by weight based on the total weight of the polymer, of t-amyl hydroperoxide. This part of the reaction may be effected as soon as 90-99.7%, preferably 95-99.7%, conversion of the monomers to polymer is completed in the same reaction vessel or kettle. Or it may be effected after a period of time, in a different reaction vessel or kettle, or at a different temperature than the preceding part of the polymerization. Preferred is the presence of t-alkyl hydroperoxide, t-alkyl peroxide, or t-alkyl perester wherein the t-alkyl group includes at least 5 Carbon atoms only after 90%, more preferably after 95%, conversion of the monomers to polymer is completed.

The t-alkyl hydroperoxide, t-alkyl peroxide, or t-alkyl perester wherein the t-alkyl group includes at least 5 Carbon atoms, optional additional oxidants, and optional reductants may be added, for example, together or separately, in one or more shots or gradually, whether uniformly or not, or in combinations thereof or variations thereon as is desired; they may be added neat, in solution, or emulsified in an appropriate medium.

Chain transfer agents such as, for example, halogen compounds such as tetrabromomethane; allyl compounds; or mercaptans such as alkyl thioglycolates, alkyl mercaptoalkanoates, and C₄-C₂₂ linear or branched alkyl mercaptans may be used to lower the molecular weight of the formed polymer and/or to provide a different molecular weight distribution than would otherwise have been obtained with any free-radical-generating initiator(s). Linear or branched C₄-C₂₂ alkyl mercaptans such as n-dodecyl mercaptan and t-dodecyl mercaptan are preferred. Chain transfer agent(s) may be added in one or more additions or continuously, linearly or not, over most or all of the entire reaction period or during limited portion(s) of the reaction period such as, for example, in the kettle charge and in the reduction of residual monomer stage.

The emulsion polymer is also contemplated to be formed in two or more stages, the stages differing, for example, in composition and/or molecular weight.

The average particle diameter of the emulsion-polymerized polymer particles is preferred to be from 30 nanometers to 500 nanometers, as measured by a BI-90 Particle Sizer. Also contemplated are multimodal emulsion polymers in which at least two different particle sizes are included.

The aqueous composition is prepared by techniques which are well known in the coatings art. First, if the elastomeric coating, caulk, sealant, fabric treatment, or pressure sensitive adhesive composition is to be pigmented, at least one pigment is well dispersed in an aqueous medium under high shear such as is afforded by a COWLES® mixer or, for more viscous compositions such as caulks and sealants, a high intensity mixer or mill. Then the waterborne polymer is added under lower shear stirring along with other elastomeric coating, caulk, sealant or pressure sensitive adhesive adjuvants as desired. Alternatively, the aqueous emulsion polymer may be included in the pigment dispersion step. The aqueous composition may contain conventional elastomeric coating, caulk, sealant, fabric treatment, or pressure sensitive adhesive adjuvants such as, for example, tackifiers, pigments, emulsifiers, coalescing agents, buffers, neutralizers, thickeners or rheology modifiers, humectants, wetting agents, biocides, plasticizers, UV absorbers such as benzophenone, substituted benzophenones, and substituted acetophenones, antifoaming agents, colorants, waxes, and anti-oxidants.

The solids content of the aqueous coating composition may be from about 10% to about 85 % by volume. The viscosity of the aqueous composition may be from 0.05 to 2000 Pa.s (50 cps to 2,000,000 cps), as measured using a Brookfield viscometer; the viscosities appropriate for different end uses and application methods vary considerably.

The aqueous composition may applied by conventional application methods such as, for example, roll coating, doctor-blade application, printing methods, saturation, air-atomized spray, air-assisted spray, airless spray, high volume low pressure spray, air-assisted airless spray, caulk gun, and trowel.

The aqueous composition may be applied to a substrate such as, for example, plastic including sheets and films, wood, metal, previously painted surfaces, woven or nonwoven fabric composed of synthetic or cellulosic fibers or mixtures thereof, cementitious substrates, asphaltic substrates or the like, with or without a prior substrate treatment such as an acid etch or corona discharge or a primer.

The aqueous composition coated on the substrate is typically dried, or allowed to dry, at a temperature from 20°C to 95°C.

The following examples are presented to illustrate the invention and the results obtained by the test procedures.

### Abbreviations

AA = acrylic acid
BA = butyl acrylate
MMA = methyl methacrylate
AN = acrylonitrile
EHA = 2-ethylhexyl acrylate
DI water = deionized water

### EXAMPLE 1 and COMPARATIVE EXAMPLE A. Preparation of predominantly acrylic emulsion polymers.

A 3 liter, four-neck, round bottom glass flask equipped with a mechanical blade stirrer, a thermocouple to monitor temperature, a reflux condenser, a means to heat and cool, and a nitrogen atmosphere may be used. The flask is charged with 400 g DI water and heated to 83 °C. A monomer pre-emulsion is prepared from 280 g DI water, 11 g sodium dodecylbenzene sulfonate (23% aqueous solution), 765 g EHA, 220 g MMA and 15 g AA. The reaction flask is charged with 4 g of ammonium persulfate dissolved in 20 g DI water and 16 g (solids basis) of a 100 nm seed latex with a total of 29 g of DI water. The remaining pre-emulsion and 1.5 g ammonium persulfate dissolved in 45 g DI water are added over three hours. Heating and cooling are applied as necessary to maintain the reaction temperature at 83 °C. When the additions are complete, 30 g DI water is used to rinse the pre-emulsion container into the flask. After 30 minutes, the flask is cooled to 60 °C. The contents of the reaction flask are divided equally between two three-liter glass flasks equipped as described above. Both flasks are maintained at 55 °C.

For Example 1, 0.008 g of FeSO₄.7 H₂O dissolved in 5 g DI water is added, followed by 0.40 g of 85% aqueous *tert*-amyl hydroperoxide in 45 g DI water and 0.25 g of sodium formaldehyde sulfoxylate dissolved in 45 g DI water is added drop-wise over one hour. The reaction mixture is cooled to 45 °C and the pH adjusted with 14 g of 14% aqueous ammonia. After cooling to room temperature, the emulsion polymer is filtered. The emulsion polymer of Example lshould have a solids content of 49.3 wt%, particle size of 360 nm and a pH of 8.1. Monomer conversion to polymer is analyzed by gas chromatography and should be greater than 99.99 wt%.

For Comparative Example A, 0.008 g FeSO₄.7 H₂O dissolved in 5 g DI water is added, followed by 0.42 g of 70% aqueous *tert*-butyl hydroperoxide dissolved in 45 g DI water and 0.25 g sodium formaldehyde sulfoxylate dissolved in 45 g DI water is added drop-wise over one hour. The reaction mixture is cooled to 45 °C and the pH is adjusted with 14 g of 14% aqueous ammonia. After cooling to room temperature the emulsion polymer is filtered. Comparative Example A should have a solids content of 49.5 wt%, particle size of 360 nm and pH of 8.2. Monomer conversion to polymer is analyzed by gas chromatography and should be greater than 99.99 wt%.

### EXAMPLE 2 and COMPARATIVE EXAMPLE B Preparation of predominantly acrylic emulsion polymers.

A 3 liter, four-neck, round bottom glass flask is equipped with a mechanical blade stirrer, a thermocouple to monitor temperature, a reflux condenser, a means to heat and cool, and a nitrogen atmosphere. The flask is charged with 400 g DI water and is heated to 83 °C. A monomer pre-emulsion is prepared from 280 g DI water, 11 g sodium dodecylbenzene sulfonate (23% aqueous solution), 885 g BA, 100 g MMA and 15 g AA. The reaction flask is charged with 4 g of ammonium persulfate dissolved in 20 g DI water and 16 g (solids basis) of a 100 nm seed latex with a total of 29 g of DI water. The remaining pre-emulsion and 1.5 g ammonium persulfate dissolved in 45 g DI water are added over three hours. Heating and cooling are applied as necessary to maintain the reaction temperature at 83 °C. When the additions are complete, 30 g DI water is used to rinse the pre-emulsion container into the flask. After 30 minutes, the flask is cooled to 60 °C. The monomer conversion to polymer is 99.62 wt.%. The contents of the reaction flask are divided equally between two three-liter glass flasks equipped as described above. Both flasks are maintained at 55 °C.

For Example 2, 0.008 g of FeSO₄.7 H₂O dissolved in 5 g DI water is added, followed by 1.18 g 85% active *tert*-amyl hydroperoxide, 1.10 g 30% aqueous hydrogen peroxide dissolved in 45 g DI water and 1.49 g sodium formaldehyde sulfoxylate dissolved in 45 g DI water added drop-wise over one hour. The reaction mixture is cooled to 45 °C and the pH is adjusted with 14 g 14% aqueous ammonia. After cooling to room temperature the emulsion polymer is filtered. The emulsion polymer of Example 1 should have a solids content of 49.3 wt%, particle size of 360 nm and a pH of 8.1. Monomer conversion to polymer is analyzed by gas chromatography and should be greater than 99.99 wt%.

For Comparative Example B, 0.008 g FeSO₄.7 H₂O dissolved in 5 g DI water is added, followed by 2.2 g of 30% aqueous hydrogen peroxide dissolved in 45 g DI water and 1.49 g sodium formaldehyde sulfoxylate dissolved in 45 g DI water added drop-wise over one hour. The reaction mixture is cooled to 45 °C and the pH is adjusted with 14 g of 14% aqueous ammonia. After cooling to room temperature the emulsion polymer is filtered. Comparative Example B has a solids content of 49.5 wt%, particle size of 360 nm and pH of 8.2. Monomer conversion to polymer is analyzed by gas chromatography and should be greater than 99.99 wt%.

### EXAMPLE 3 Preparation of predominantly acrylic emulsion polymers.

A 3 liter, four-neck, round bottom glass flask is equipped with a mechanical blade stirrer, a thermocouple to monitor temperature, a reflux condenser, a means to heat and cool, and a nitrogen atmosphere. The flask is charged with 400 g DI water and is heated to 65 °C. A monomer pre-emulsion is prepared from 280 g DI water, 11 g sodium dodecylbenzene sulfonate (23% aqueous solution), 765 g EHA, 220 g MMA and 15 g AA. The reaction flask is charged with 4 g ammonium persulfate dissolved in 20 g DI water and 16 g (solids basis) of a 100 nm seed latex with a total of 29 g of DI water. The remaining pre-emulsion and a redox initiator system consisting of: 0.008 g FeSO₄.7 H₂O dissolved in 5 g DI water, 2.96 g of 85% active *tert*-amyl hydroperoxide in 45 g DI water (both added all at once) and 1.86 g sodium formaldehyde sulfoxylate dissolved in 45 g DI water (added over three hours) is employed. Heating and cooling are applied as necessary to maintain the reaction temperature at 65 °C. When the additions are complete, 30 g DI water is used to rinse the pre-emulsion container into the flask. After 30 minutes, the flask is cooled to 60 °C. A sample is taken, analyzed by gas chromatography and the monomer conversion to polymer should be 99.6 wt.%.

Once an operating temperature of 55 °C is reached through cooling, 0.008 g of FeSO₄.7 H₂O dissolved in 5 g DI water is added, followed by 0.40 g of 85% aqueous *tert*-amyl hydroperoxide in 45 g DI water and 0.25 g of sodium formaldehyde sulfoxylate dissolved in 45 g DI water added drop-wise over one hour. The reaction mixture is cooled to 45 °C and the pH is adjusted with 14 g 14% aqueous ammonia. After cooling to room temperature the emulsion polymer is filtered. The emulsion polymer of Example 3 has a solids content of 49.3 wt%, particle size of 360 nm and a pH of 8.1. Monomer conversion to polymer is analyzed by gas chromatography and should be greater than 99.99 wt%.

### COMPARATIVE EXAMPLE C Preparation of predominantly acrylic emulsion polymers.

A 3 liter, four-neck, round bottom glass flask is equipped with a mechanical blade stirrer, a thermocouple to monitor temperature, a reflux condenser, a means to heat and cool, and a nitrogen atmosphere. The flask is charged with 400 g DI water and is heated to 65 °C. A monomer pre-emulsion is prepared from 280 g DI water, 11 g sodium dodecylbenzene sulfonate (23% aqueous solution), 765 g EHA, 220 g MMA and 15 g AA. The reaction flask is charged with 4 g ammonium persulfate dissolved in 20 g DI water and 16 g (solids basis) of a 100 nm seed latex with a total of 29 g DI water. The remaining pre-emulsion and a redox initiator system consisting of: 0.008 g FeSO₄.7 H₂O dissolved in 5 g DI water, 3.11 g of 70% aqueous *tert*-butyl hydroperoxide dissolved in 45 g DI water (both added all at once) and 1.86 g sodium formaldehyde sulfoxylate dissolved in 45 g DI water (added over three hours) is employed. Heating and cooling are applied as necessary to maintain the reaction temperature at 65 °C. When the additions are complete, 30 g DI water is used to rinse the pre-emulsion container into the flask. After 30 minutes, the flask is cooled to 60 °C. A sample is taken, analyzed by gas chromatography and the monomer conversion to polymer should be 99.6 wt.%.

Once an operating temperature of 55 °C had been reached through cooling, 0.008 g FeSO₄.7 H₂O dissolved in 5 g DI water is added, followed by 0.40 g 85% aqueous *tert*-amyl hydroperoxide dissolved in 45 g DI water and 0.25 g sodium formaldehyde sulfoxylate dissolved in 45 g DI water added drop-wise over one hour. The reaction mixture is cooled to 45 °C and the pH is adjusted with 14 g 14% aqueous ammonia. After cooling to room temperature the emulsion polymer is filtered. The emulsion polymer of Comparative Example C has a solids content of 49.3 wt%, particle size of 360 nm and a pH of 8.1. Monomer conversion to polymer is analyzed by gas chromatography and should be greater than 99.99 wt%.

### EXAMPLE 4. Preparation of aqueous compositions and evaluation of elastomeric coatings.

Aqueous compositions are made using the following ingredients, added in the order given.:

| Ingredients | Amount (g) |
|---|---|
| Water | 106.77 |
| Tamol 731¹ | 12.28 |
| Potassium tripolyphosphate | 3.1 |
| Nopco NXZ ² | 7.2 |
| Acrysol RM 8W ¹ | 17.7 |
| Propylene Glycol | 20.0 |
| Tioxide TR-92 ³ | 100.0 |
| Durcal 5 ⁴ | 447.3 |
| Butyl Carbitol⁵ | 13.6 |

| | |
|---|---|
| The ingredients are mixed using a high shear Cowles mixer and 500 g of emulsion polymer is added with stirring. ¹ Trademark of Rohm and Haas Company. ² Trademark of Diamond Shamrock Chemical Company. ³ Trademark of Tioxide Europe Ltd. ⁴ Trademark of OMYA, Inc. ⁵ Trademark of Union Carbide Chemical Co, | |

The aqueous compositions are coated at equal volume on release paper at 1 mm wet thickness and are dried for 23 days (at 25 °C and 50% relative humidity). Dumbbell shaped specimens having a neck width of 10 mm and a neck length of 30 mm are cut out. The thickness of each sample is measured at its neck with a micrometer. Elongation is determined using the Tinius Olsen UTM (Model No. H10K-S, Tinius Olsen Testing Machine Co., Inc., Willow Grove, PA). The controlled temperature chamber is set at -10°C. The separation speed is set at 5.08 cm/min (2 inch/min).
Elastomeric coatings containing emulsion polymers Examples 1-2 of the invention should exhibit higher low temperature elongation at break relative to the corresponding Comparative samples containing emulsion polymers Comparative Examples A-B.

### EXAMPLE 5. Evaluation of aqueous compositions as pressure sensitive adhesives Dried films of the emulsion polymers of Example 3 and of Comparative Example C are tested according to the following methods.

Peel: PSTC-1 Peel Adhesion of Single Coated Pressure Sensitive Tapes at 180° Angle (PSTC = Pressure Senstitive Tape Council, 401 N. Michigan Avenue, #00, Chicago, IL 60611), adhesive applied to stainless steel.
Loop Tack: ASTM D6195 Standard Test Methods for Loop Tack
Shear: ASTM D6463 Standard Test Methods for Time to Failure of Pressure Sensitive Articles under Sustained Shear Loading.

The pressure sensitive adhesive, dried emulsion polymer of Example 3, of this invention exhibits improved tack relative to that of Comparative Example C.

### EXAMPLES 6-8. Preparation of aqueous compositions and evaluation of fabric treatments. Examples 1-3 and Comparative Examples A-C are repeated with the exception that the monomer composition in each case is 87.5 BA/7 AN/1.5 AA/4 N-methylol acrylamide to provide Examples 6-8 and Comparative Examples D-F, respectively. Examples 6-8 and Comparative Examples D-F are formulated as follows (parts by weight):

| | |
|---|---|
| Polymer emulsion | 100 |
| Foaming aid | 3 |
| Foam stabilizer | 2 |
| Filler | 5 |
| Catalyst | 2 |
| Crosslinker | 3 |
| Thickener | 6 |

Ammonia is added to a pH of 8.5.
The formulations are foamed to a density of 250 grams/liter.
Fabric is then coated with a 15 mil thick layer of the formulation using a Gardner knife. Short fiber flock is then applied to the wet coating by conventional electrostatic flocking procedures, then is dried and is cured at 150 °C for 5 minutes.

The flocked fabrics bearing the compositions including the emulsion polymers of Examples 6-8 exhibit Tabor abrasion resistance and wash and dry cleaning durability superior to those bearing the compositions including the emulsion polymers of corresponding Comparative Examples D-F.

## Claims

1. An aqueous composition suitable for use when dry as an improved elastomeric coating, caulk, sealant, fabric treatment, or pressure sensitive adhesive comprising a predominantly acrylic aqueous emulsion polymer, said polymer having a glass transition temperature (Tg) from -90°C to 20°C, formed by the free radical polymerization of at least one ethylenically unsaturated nonionic acrylic monomer and 0-7.5%, by weight based on the total weight of said polymer, ethylenically unsaturated acid monomer until 90-99.7 % of said monomers by weight, based on the total weight of said polymer, has been converted to polymer and subsequently at least half of the remaining monomer is converted to polymer in the presence of 0.01-0.099 %, by weight based on the total weight of said polymer, t-alkyl hydroperoxide, t-alkyl peroxide, or t-alkyl perester wherein the t-alkyl group includes at least 5 Carbon atoms.

2. The composition of claim 1, wherein the t-alkyl group including at least 5 Carbon atoms is present only after 90% of said monomers, based on the total weight of said polymer, has been converted to polymer.

3. A method for preparing an aqueous emulsion polymer suitable for use in an improved elastomeric coating, caulk, sealant, fabric treatment, or pressure sensitive adhesive comprising forming the aqueous composition according to claim 1, wherein the composition comprises a predominantly acrylic aqueous emulsion polymer.

4. A method for coating a substrate with an aqueous composition to provide an elastomeric coating on a substrate comprising:
forming said aqueous composition according to claim 1 or claim 2; applying said aqueous composition to said substrate; and drying, or allowing to dry, said aqueous composition.

5. A method for applying a caulk or sealant composition to a substrate comprising:
forming an aqueous composition according to claim 1or claim 2; applying said aqueous composition to said substrate; and drying, or allowing to dry, said aqueous composition.

6. A method for providing a pressure sensitive adhesive on a substrate comprising:
forming an aqueous composition according to claim 1 or claim 2; applying said aqueous composition to said substrate; and drying, or allowing to dry, said aqueous composition.

## Patentansprüche

1. Wäßrige Zusammensetzung, geeignet zur Verwendung, wenn trocken, als ein(e) verbesserte(s/r) elastomere(s/r) Beschichtung, Abdichtung, Dichtungsmaterial, Gewebebehandlungsmittel oder druckempfindlicher Klebstoff, umfassend ein vorwiegend acrylisches wäßriges Emulsionspolymer, wobei das Polymer eine Glasübergangstemperatur (Tg) von -90°C bis 20°C aufweist, gebildet durch die radikalische Polymerisation von zumindest einem ethylenisch ungesättigten, nicht-ionischen Acrylmonomer und 0 bis 7,5 Gew.-% ethylenisch ungesättigtem sauren Monomer, bezogen auf das Gesamtgewicht des Polymers, bis 90 bis 99,7 Gew.-% des Monomers, bezogen auf das Gesamtgewicht des Polymers, zu Polymer umgewandelt worden sind, und nachfolgend zumindest die Hälfte des verbleibenden Monomers in der Gegenwart von 0,01 bis 0,099 Gew.-% t-Alkylhydroperoxid, t-Alkylperoxid oder t-Alkylperester, wobei die t-Alkylgruppe zumindest fünf Kohlenstoffatome einschließt, bezogen auf das Gesamtgewicht des Polymers, zu Polymer umgewandelt worden ist.

2. Zusammensetzung nach Anspruch 1, wobei die zumindest fünf Kohlenstoffatome einschließende t-Alkylgruppe nur vorhanden ist, nachdem 90% des Monomers, bezogen auf das Gesamtgewicht des Polymers, zu Polymer umgewandelt worden sind.

3. Verfahren zur Herstellung eines wäßrigen Emulsionspolymers, das zur Verwendung in eine(r/m) verbesserten elastomeren Beschichtung, Abdichtung, Dichtungsmaterial, Gewebebehandlungsmittel oder druckempfindlichen Klebstoff geeignet ist, umfassend das Bilden der wäßrigen Zusammensetzung nach Anspruch 1, wobei die Zusammensetzung ein vorwiegend acrylisches wäßriges Emulsionspolymer umfaßt.

4. Verfahren zur Beschichtung eines Substrats mit einer wäßrigen Zusammensetzung, um eine elastomere Beschichtung auf einem Substrat bereitzustellen, umfassend:
Bilden der wäßrigen Zusammensetzung nach Anspruch 1 oder Anspruch 2, Aufbringen der wäßrigen Zusammensetzung auf das Substrat, und Trocknen oder Trocknenlassen der wäßrigen Zusammensetzung.

5. Verfahren zum Aufbringen einer Abdichtungs- oder Dichtungsmaterialzusammensetzung auf ein Substrat, umfassend:
Bilden einer wäßrigen Zusammensetzung nach Anspruch 1 oder Anspruch 2, Aufbringen der wäßrigen Zusammensetzung auf das Substrat, und Trocknen oder Trocknenlassen der wäßrigen Zusammensetzung.

6. Verfahren zum Aufbringen eines druckempfindlichen Klebstoffs auf ein Substrat, umfassend:
Bilden einer wäßrigen Zusammensetzung nach Anspruch 1 oder Anspruch 2, Aufbringen der wäßrigen Zusammensetzung auf das Substrat, und Trocknen oder Trocknenlassen der wäßrigen Zusammensetzung.

## Revendications

1. Composition aqueuse utilisable lorsqu'elle est sèche comme revêtement élastomère, matage, étanchéité, traitement de tissu ou adhésif sensible à la pression amélioré comprenant un polymère en émulsion aqueuse de manière prédominante acrylique, ledit polymère présentant une température de transition vitreuse (Tg) de -90°C à 20°C, formée par la polymérisation radicalaire libre d'au moins un monomère acrylique non ionique éthyléniquement insaturé et de 0-7,5 % en poids, rapporté au poids total dudit polymère, de monomère d'acide éthyléniquement insaturé jusqu'à ce que 90-99,7 % en poids desdits monomères, rapporté au poids total dudit polymère, ont été convertis en polymère et au moins la moitié du monomère restant est ensuite convertie en polymère en présence de 0,01-0,099 % en poids, rapporté au poids total dudit polymère, d'hydroperoxyde de t-alkyle, de peroxyde de t-alkyle ou de perester t-alkylique, dans laquelle le groupe t-alkyle comprend au moins 5 atomes de carbone.

2. Composition selon la revendication 1, dans laquelle le groupe t-alkyle comprenant au moins 5 atomes de carbone est présent seulement après que 90 % desdits monomères, rapportés au poids total dudit polymère, ont été convertis en polymère.

3. Procédé de préparation d'un polymère en émulsion aqueuse utilisable dans un revêtement élastomère, un matage, une étanchéité, un traitement de tissu ou un adhésif sensible à la pression amélioré comprenant la formation de la composition aqueuse selon la revendication 1, dans lequel la composition comprend un polymère en émulsion aqueuse de manière prédominante acrylique.

4. Procédé pour le revêtement d'un substrat avec une composition aqueuse pour fournir un revêtement élastomère sur un substrat comprenant :
la formation de ladite composition aqueuse selon la revendication 1 ou la revendication 2 ; l'application de ladite composition aqueuse audit substrat ; et le séchage ou le laisser sécher de ladite composition aqueuse.

5. Procédé d'application d'une composition de matage ou d'étanchéité sur un substrat comprenant :
la formation d'une composition aqueuse selon la revendication 1 ou la revendication 2 ; l'application de ladite composition aqueuse audit substrat ; et le séchage ou le laisser sécher de ladite composition aqueuse.

6. Procédé de fourniture d'un adhésif sensible à la pression sur un substrat comprenant :
la formation d'une composition aqueuse selon la revendication 1 ou la revendication 2 ; l'application de ladite composition aqueuse audit substrat ; et le séchage ou le laisser sécher de ladite composition aqueuse.
